# EUROPÄISCHE PATENTSCHRIFT

(11) **EP 1 432 560 B1**
(45) Veröffentlichungstag und Bekanntmachung des Hinweises auf die Patenterteilung: **20.12.2006**
(21) Anmeldenummer: 02748538.2
(22) Anmeldetag: 16.08.2002
(51) Int. Cl.: B29B 7/40, B29B 7/74, B29B 7/90, C08J 3/215

(54) **KONTINUIERLICHE HERSTELLUNG VON ELASTOMERMISCHUNGEN FÜR DIE GUMMIHERSTELLUNG**
CONTINUOUS PRODUCTION OF ELASTOMER MIXTURES FOR PRODUCING RUBBER
PRODUCTION CONTINUE DE MELANGES ELASTOMERES POUR LA FABRICATION DE CAOUTCHOUC

(30) Priorität: 04.10.2001 DE 10149163
(43) Veröffentlichungstag der Anmeldung: 30.06.2004
(73) Patentinhaber: Bühler AG, 9240 Uzwil (CH)
(72) Erfinder: INNEREBNER, Federico, CH-8049 Zürich (CH); KRUMPHOLZ, Erhard, CH-9244 Niederuzwil (CH); NÄF, Christoph, CH-8400 Winterthur (CH); STURM, Achim-Philipp, CH-9244 Niederuzwil (CH); STALDER, Bernhard, CH-9244 Niederuzwil (CH); HALTER, Roland, CH-9000 St.Gallen (CH)
(74) Vertreter: Frommhold, Joachim
(86) Internationale Anmeldenummer: PCT/CH2002/000450
(87) Internationale Veröffentlichungsnummer: WO 2003/031131

(56) Entgegenhaltungen:
- EP-A- 0 902 057
- EP-A- 1 110 691
- DE-A- 1 470 753
- DE-A- 2 549 027
- GB-A- 623 600
- GB-A- 806 362
- US-A- 3 178 390
- US-A- 5 597 235

## Beschreibung

Die Erfindung bezieht sich auf ein Verfahren und eine Vorrichtung zum kontinuierlichen Herstellen von Elastomermischungen (Elastomercompounds) gemäss Anspruch 1 bzw. Anspruch 21.

Elastomermischungen, die aus einer kontinuierlichen Elastomermatrix und einem in die Elastomermatrix eingearbeiteten Füllstoff bestehen, sind Ausgangsprodukte für die Gummiherstellung. Das Elastomer kann z.B. Naturkautschuk oder synthetischer Kautschuk, wie z.B. Nitrylkautschuk sein. Als Füllstoff können z.B. Russpartikel oder Silikatpartikel verwendet werden. Es hat sich gezeigt, dass der Verteilungsgrad und Zerteilungsgrad (Dispersionsgrad) auf die gummitechnischen Eigenschaften einen beachtlichen Einfluss hat. Bei bekannten kontinuierlichen Verfahren zur Herstellung derartiger Elastomermischungen erfolgt dieses dispersive und distributive Mischen sowie das Plastifizieren und/oder Mastifizieren des Füllstoffes bzw. des Elastomers mit Hilfe von Innenmischern.

Um die Herstellung von Elastomermischungen für die Gummiindustrie zu vereinfachen, wurde versucht, die traditionellen Darbietungsformen des Natur- oder Synthesekautschuks, wie z.B. die Ballenform, durch flüssiges oder pulverförmiges Elastomer als Rohmaterial zu ersetzen. Zudem ist die partikulierte Darbietungsform die Voraussetzung für eine kontinuierliche Kautschukmischungsherstellung.

Die Verwendung flüssiger Elastomere wurde bisher nur ansatzweise entwickelt, da dies ein Umdenken und beträchtliche Investitionen seitens der Gummiindustrie erfordert. Elastomere in Pulverform scheinen sich jedoch als Ausgangsmaterial für die Herstellung von Elastomermischungen sowohl im diskontinuierlichen als auch im kontinuierlichen Verfahren zu bewähren. Dies wiederum machte es notwendig, Verfahren für die Herstellung von Pulverkautschuk bereit zustellen. So wurden Verfahren zum Sprühtrocknen und Gefriertrocknen von Nitrylkautschuk oder natürlichem Kautschuk entwickelt. Auch das Verfahren der Blitzverdampfung oder Mahlverfahren wurden verwendet, um kleinere Teilchen zu erzeugen. Ein Nachteil all dieser Verfahren besteht jedoch in der Klebrigkeit und der Kaltfliesseigenschaft der erzeugten Kautschukteilchen. Dennoch wurden Pulverprodukte hergestellt, indem man die Teilchen mit sehr feinen organischen und anorganischen Pulvern einstaubte, um die Kohäsionskräfte zu deaktivieren. Leider wurden durch diese Massnahmen immer wieder ungewollte Verunreinigungen in die hergestellten Teilchen eingetragen.

Folglich wurde ein Verfahren zur Herstellung von Kautschuk/Füllstoff-Mischungen in Pulverform entwickelt. Hierbei wird zuerst eine stabile Kautschuk/Wasser-Emulsion unabhängig von der Art und dem Zustand des Kautschuks gebildet (z.B. Lösungs- oder Emulsions-Polymerisate, Naturkautschuk oder Nitrylkautschuk). Dieser Emulsion wird Füllstoff (Russ oder Silikat) zugefügt, dessen Teilchengrössen-Verteilung zuvor genau eingestellt wurde und der sich zusammen mit verschiedenen Additiven in einer wässrigen Suspension befindet. Die Latex-Emulsion und die Füllstoff-Suspension werden in einem Mischbehälter durch intensives Rühren homogenisiert. Anschliessend wird der Fällungsvorgang bei ständigem Rühren in einem Reaktionsbehälter abgeschlossen, und das gewonnene Fällungsprodukt wird zur weiteren Verarbeitung in einen Homogenisierungsbehälter überführt. Ein Grossteil des Wassers wird dann in einer Zentrifuge entfernt, woraufhin die feinverteilte Mischung bis auf einen Restwassergehalt von weniger als 1 % getrocknet wird. Die so gewonnenen Kautschuk/Füllstoff-Mischungen in Pulverform sind nach dem Trocknen rieselfähig und eignen sich für die Herstellung von Gummiprodukten in einem kontinuierlichen Verfahren.

Zur Gummiherstellung bzw. zur Herstellung von Gummiartikeln werden dann die so gewonnen pulverförmigen Kautschuk/Füllstoff-Mischungen in einem Doppelwellenextruder zusammen mit Weichmachern und anderen Beimischungen plastifiziert und/oder mastifiziert ("aufgeschmolzen"), wodurch eine kontinuierliche flüssige Polymermatrix mit in ihr suspendierten Füllstoffteilchen entsteht. Durch Hinzugabe eines Vulkanisationsmittels werden zwischen den Elastomermolekülen Vernetzungen geschaffen, so dass die anschliessend abgekühlte "Masse" des geformten Endproduktes die gewollten gummielastischen Eigenschaften aufweist. Je nach der Art des verwendeten Elastomers, der Art, der Grösse und dem Gehalt der Füllstoffteilchen lassen sich somit massgeschneiderte Gummimischungen herstellen. Hierfür benötigt man mindestens derte Gummimischungen herstellen. Hierfür benötigt man mindestens zwei unterschiedliche pulverförmige Kautschuk/Füllstoff-Mischungen, aus denen man wiederum durch deren geeignetes Mischungsverhältnis untereinander eine grosse Bandbreite von Gummimischungen gewinnen kann.

Ein derartiges Verfahren zur Herstellung pulverförmiger, frei fliessender KautschukFüllstoff-Mischungen (Kautschuk/Füllstoff-Batches) ist in der EP-1035155 A1 offenbart. Über eine Suspension mit dem entsprechenden Kautschuk und Russ wird durch Koagulation der Kautschuk und der Russ zu "Granulaten" (Pulverkautschuk) ausgefällt. Der Pulverkautschuk besitzt eine rundliche Form mit einem Durchmesser von 1 bis 3 mm, wobei der Russ das Polymer umgibt. Der Russ liegt bereits in einer vorverteilten Form vor. Der Russ ermöglicht eine einfache Handhabung, insbesondere eine einfache Lagerung und Dosierung.

Grundsätzlich lassen sich mit diesem Verfahren alle wichtigen Kautschuke (natürliche oder künstliche) zu Granulat herstellen. Diverse Zuschlagsstoffe und Weichmacher können in das Granulat eingebaut werden, und vereinfachen dadurch das Zudosieren der Komponenten in das Mischaggregat.

Es hat sich jedoch auch gezeigt, dass die Gummiherstellung ausgehend von pulverförmigen Kautschuk/Füllstoff-Mischungen auch Nachteile besitzt. Betrachtet man nämlich die gesamte Energiebilanz ausgehend vom Naturkautschuk oder künstlichem Kautschuk bis zum Gummi-Endprodukt, so erkennt man, dass diese Art der Gummiherstellung energieintensiv ist. Da das Wasser schon bei der Herstellung des Pulverkautschuks (Kautschuk/Füllstoff-Gemisches) entfernt wird und anschliessend in einem Doppelwellenextruder dieser Pulverkautschuk zusammen mit Vulkanisationsmittel und anderen Beimischungen "aufgeschmolzen" wird, muss für das Aufschmelzen und Einarbeiten der Füllstoffe sehr viel Energie aufgebracht werden. Neben den hohen Energiekosten muss hierbei auch stets darauf geachtet werden, dass die Temperatur des Produktes im Extruder nicht über eine kritische Temperatur ansteigt, da sonst das Elastomer beschädigt werden kann. Die Elastomer-Polymerketten werden dabei durch die hohe Temperatur in kleinere Bruchstücke zerlegt bzw. chemisch modifiziert, und/oder weitere organische Bestandteile, insbesondere Weichmacher werden zersetzt, und/oder in Gegenwart von Vulkanisationsmittel kann eine verfrühte Vernetzung eingeleitet werden.

Derartige Verfahren zur Herstellung von Elastomermischungen sind z.B. in den Dokumenten US 3178390, US 5597235, EP 0 902 057 A2, GB 806362, EP 1 110 691 A2 und GB 623600 beschrieben.

Ausgehend von diesen Unzulängllchkeiten des Stands der Technik stellt sich die vorliegende Erfindung die Aufgabe, ein Verfahren zur Herstellung von Elastomennischungen für die Gummiherstellung bereit zustellen, bei dem die oben genannten Probleme des Stands der Technik beseitigt oder zumindest verringert werden.

Diese Aufgabe wird durch das Verfahren gemäss Anspruch 1 und die Vorrichtung gemäss Anspruch 21 gelöst.

Das Vorliegen des Elastomers in gleichmässig verteilter Form in einem Fluidmedium bewirkt eine geringere Viskosität, solange noch ausreichend viel Fluidmedium in dem zu verarbeitenden Produkt enthalten ist und sorgt durch die Anwesenheit des Fluidmediums, bei dem es sich vorzugsweise um Wasser handelt, gleichzeitig für eine wesentlich bessere Kühlung als bei dem "trockenen" Verfahren des Standes der Technik.

Bei diesem "nassen" Verfahren werden dem in dem ersten Bearbeitungsbereich In Form von Elastomerpartikeln gleichmässig verteilten Elastomer vor dem Zuführen in den zweiten Bearbeitungsbereich Füllstoff-Partikel, insbesondere Russe oder Silikate, zugeführt. Die Einarbeitung der für die Gummiherstellung notwendigen Füllstoffe bzw. Verstärkungsstoffe erfolgt somit zu einem Zeitpunkt, bei dem das zu verarbeitende Produkt aufgrund des noch vorhandenen Fluidmediums in dieser nassen Umgebung noch eine relativ geringe Viskosität hat. Dies ermöglicht es auch, die notwendige Viskosität einzustellen, denn für die Zerteilung der Komponenten wird eine gewisse Scherenergie benötigt. Diese wird u.a. durch die Viskosität beeinflusst. Die Idee besteht darin, eine möglichst geringe Viskosität einzustellen, die noch notwendig ist, damit genügend Scherenergie eingetragen wird. Somit kann man die geringe bzw. für die jeweilige Verfahrensstufe eingestellte Viskosität ausnutzen, um schon vor dem Entwässern und Entgasen eine Ideale Verteilung und Zerteilung der verschiedenen Komponenten im Produkt zu erzielen.

Erfindungsgemäss erfolgt die Entfernung der Fluide und/oder Flüssigkeiten in mehreren Entwässerungsschritten während des Durchlaufs des Produktes durch den zweiten Bearbeitungsbereich, wobei insbesondere auch das Einarbeiten von Füllstoff in mehreren Einarbeitungsschritten während des Durchlaufs des Produktes durch den zweiten Bearbeitungsbereich erfolgt.

Auf diese Weise wird zu Beginn des Mischvorgangs, wenn noch viele Komponenten in die Elastomermischung eingearbeitet werden müssen, für eine niedrige Viskosität des zu bearbeitenden Produktes gesorgt, während gegen Ende des Mischvorgangs aufgrund der Entwässerung und der Entgasung eine Zunahme der Viskosität erfolgt, die aber zu diesem späten Zeitpunkt im Verfahren akzeptabel ist.

Zweckmässigerweise arbeitet man derart, dass die in dem ersten Bearbeitungsbereich wirkenden Scherraten im Bereich von 100/s bis 100'000/s liegen, wobei die Intensität der Scher- und/oder Dehnströmung in dem ersten Bearbeitungsbereich stetig von einem Minimum auf ein Maximum ansteigt und anschliessend stetig oder abrupt wieder abnimmt. Insbesondere ist in dem ersten Bearbeitungsbereich die maximale Scherrate in einem ersten Teilbereich höchstens etwa das 5-fache der minimalen Scherrate in einem zweiten Teilbereich des ersten Bearbeitungsbereichs, und das Volumen des ersten Teilbereichs ist höchstens etwa das 3-fache des Volumens des zweiten Teilbereichs.

Vorzugsweise werden der aus dem ersten Bearbeitungsbereich in den zweiten Bearbeitungsbereich überführten fliessfähigen Masse im zweiten Bearbeitungsbereich weitere Komponenten, wie z.B. Füllstoffe, Additive, Vulkanisationsmittel, Beschleuniger, Weichmacher und Hilfsmittel, hinzugegeben.

Je nach der Art des Elastomers (Naturkautschuk, Synthesekautschuk, etc.) kann das erste Fluidmedium ein Lösungsmittel sein, in dem das Elastomer in gelöster Form vorliegt, oder das Elastomer kann als Emulsion einer Elastomerlösung in einer mit dem Lösungsmittel nicht mischbaren Flüssigkeit vorliegen. Bei Bedarf kann das Elastomer auch als Suspension von Elastomerteilchen in einer Flüssigkeit oder als gelartiger Verbund in einem Lösungsmittel vorliegen.

Zweckmässigerweise wird bei Zudosierung von Vulkanisationsmitteln in das Produkt die Produkttemperatur im zweiten Bearbeitungsbereich zumindest förderabseitig von der Zudosierungsstelle unterhalb der Vulkanisationstemperatur gehalten. Dadurch wird verhindert, dass eine Vulkanisation der Elastomermischung schon bei deren Mischungsherstellung erfolgt.

Während die weiteren Komponenten und die Füllstoffe im Bearbeitungsbereich in das Elastomer eingearbeitet und/oder zerteilt und/oder verteilt werden, wird das Produkt im zweiten Bearbeitungsbereich zweckmässigerweise auch schon nach und nach entgast.

Besonders vorteilhaft ist es auch, wenn die Entfernung der Fluide und/oder Flüssigkeiten aus dem Produkt vor dem Eindosieren des Vulkanisationsmittels erfolgt. Es kann nämlich vorkommen, dass die Gegenwart von Wasser die Reaktivität des Vulkanisatlonsmittels beeinflusst Ausserdem muss am Ende die Mischung wasserfrei vorliegen. Für die Vulkanisation, die nach einer späteren Formgebung eingeleitet wird, werden typischerweise Temperaturen deutlich über 100°C gefahren. Sollte dann immer noch Wasser im Produkt vorhanden sein, führt dies zu einer ggf. gewollten Aufschäumung der sich bildenden Gummimasse.

Besonders zweckmässig ist es dabei, wenn die Bearbeitungsschritte und die Entwässerungsschritte abwechselnd aufeinander folgen, wobei vorzugsweise während eines Entwässerungsschrittes von den Fluiden und/oder Flüssigkeiten nur so viel aus dem Produkt-entfemt wird, dass für den jeweils nachfolgenden Einarbeitungsschritt eine optimale Einarbeitung erreicht wird.

In der Regel wird man dem Produkt bei dem erfindungsgemässen Verfahren auch ein Koagulationsmittel zuführen. Dies ist besonders zweckmässig, wenn das Produkt beim Austreten aus dem Mischextruder geformt wird, um z.B. anschliessend granuliert oder zu Strangprofilen verarbeitet zu werden. Auf diese Weise erhält man ein unter geeigneten Bedingungen umformbares und noch nicht vulkanisiertes Ausgangsprodukt, das nach seiner Umformung in einem letzten Schritt vulkanisiert werden kann. Ähnlich wie bei der Herstellung von Kunststoffartikeln aus Thermoplasten bietet sich damit eine sehr komfortable Weiterverarbeitung der noch nicht vulkanisierten, in Granulatform vorliegenden Elastomere zu fertigen, d.h. vulkanisierten und umgeformten Gummiprodukten.

Um bei der erfindungsgemässen Vorrichtung in dem ersten Bearbeitungsbereich die weiter oben erwähnten Scherraten zu erzielen, verwendet man für den ersten Bearbeitungsbereich einen Zwischenraum zwischen zwei koaxialen Drehelementen, die relativ zu einander um ihre gemeinsame Achse drehbar sind. Bei den beiden koaxialen Drehelementen kann es sich dabei z.B. um ein Zylinder-Konus-Paar, um ein Konus-Konus-Paar oder z.B. um ein Doppelkonus-Doppelkonus-Paar handeln, wobei sich der Zwischenraum zwischen den koaxialen Drehelementen in der Produkt-Förderrichtung verjüngt oder erweitert. Für den Konus sind prinzipiell Öffnungswinkel zwischen 0 und 180° denkbar, wobei vorzugsweise Öffnungswinkel unter 90° realisiert werden.

Zweckmässigerweise ist eines der Drehelemente ein Rotor und das andere ein Stator. Alternativ können aber auch beide Drehelemente Rotoren sein, die mit unterschiedlichen Drehgeschwindigkeiten antreibbar sind.

Zweckmässigerweise erstrecken sich von der Oberfläche des jeweiligen Drehelements stiftartige Erhebungen in den Zwischenraum hinein, die sich bei Drehung der Drehelemente aneinander vorbei bewegen.

Vorzugsweise befinden sich in dem Zwischenraum auch noch Kollisionskörper, die mit der Oberfläche und/oder den stiftartigen Erhebungen der Drehelemente und/oder dem Produkt zusammenstossen können. Als Kollisionskörper bzw. Mahlkörper verwendet man z.B. Kügelchen aus Stahl oder Kunststoff, deren Masse bzw. Grösse an die angestrebte Korngrössenverteilung des Produktes angepasst sind.

Für den ersten Bearbeitungsbereich können auch Rührwerkskugelmühlen der sog. K-Serie (K8, K60, K120, K240) der Anmelderin oder eine Zentrifugalmühle (Modell ZR120) der Anmelderin verwendet werden. Somit werden die dem ersten Bearbeitungsbereich zugeführten Füllstoff- und Elestornerpartikel durch Nassvermahlung aufbereitet, bevor sie dem zweiten Bearbeitungsbereich zugeführt werden. Auf diese Weise wird vermieden, dass die für die Verteilung und Zerteilung der Verstärkungsstoffe verwendete und z.T. in Wärme umgewandelte Energie nicht unmittelbar dem Elastomer zugeführt wird, dieses also thermisch geschont wird.

Bei der erfindungsgemässen Vorrichtung verwendet man zweckmässigerweise als zweiten Bearbeitungsbereich den Prozessraum eines Mischextruders, insbesondere eines Mehrwellen-Extruders. Besonders vorteilhaft ist ein dichtkämmender, gleichsinnig drehender Mehrwellen-Extruder, insbesondere auch ein Ringextruder.

Bei der besonders vorteilhaften Ausgestaltung der erfindungsgemässen Vorrichtung weist der Mehrwellen-Extruder mindestens eine seitliche Öffnung auf, in die jeweils ein zu ihr hin fördernder Seitenextruder mündet, wobei der eine bzw. die mehreren Entwässerungsschritte an der einen bzw. den mehreren seitlichen Öffnungen entlang der Produkt-Durchlaufrichtung entlang des Mischextruders erfolgen. Dieser Seitenextruder ermöglicht es freiwerdendem Wasser, aus dem Produkt entgegen der Förderrichtung des Seitenextruders zu entweichen, während das Elastornermaterial durch den Seitenextruder im Mischextruder stets zurückgehalten wird.

Als vorteilhafte Ergänzung zu dem erfindungsgemässen Verfahren kann das aus dem zweiten Bearbeitungsbereich austretende und mit Vulkanisationamitteln versehene Produkt in einem dritten Bearbeitungsbereich zu einem kontinuierlichen Profilstrang geformt und ausvulkanisiert werden. Je nach Bedarf kann dieser kontinuierliche Profilstrang in Profile mit bestimmter Länge geschnitten werden. Hierfür weist die erfindungsgemässe Vorrichtung einen dem zweiten Bearbeitungsbereich nachgeschalteten dritten Bearbeitungsbereich auf, der insbesondere als Vulkanlsationsstrecke ausgebildet ist. Das für die Herstellung von Gummilangwaren aus dem Mischextruder austretende Produkt wird dann entlang der Vulkanisationsstrecke derart temperiert, dass eine kontinuierliche Vernetzung der Polymere stattfindet Für den speziellen Fall der Gummilangwaren, wie z.B. Profile, verfügt man somit über einen vollständig kontinuierlichen Prozess ausgehend von den Rohstoffen Latex und Füllstoff mit anfänglich viel Wasser bzw. organischem Lösungsmittel bis hin zu dem fertig geformten, entwässerten und schliesslich vernetzten Gummilangwaren-Endprodukt.

Bei einer besonders einfachen Ausführung des erfindungsgemässen Verfahrens ist der erste Bearbeitungsbereich ein erster Abschnitt eines Extruders und der zweite Bearbeitungsbereich ein zweiter Abschnitt desselben Extruders, bei dem es sich insbesondere um einen Mehrwellen-Extruder handelt. Bei einer alternativen Ausführung des erfindungsgemässen Verfahrens kann der erste Bearbeitungsbereich einen ersten Teilextruder aufweisen, durch den das in Form gleichmässig verteilter Partikel in dem Fluidmedium vorliegende Elastomer bearbeitet wird, und einen zweiten Teilextruder aufweisen, durch den die Füllstoffpartikel enthaltende Aufschlämmung bearbeitet wird. Dies ermöglicht es, den ersten Teilextruder speziell derart zu gestalten, dass er die gleichmässige Verteilung der emulgierten bzw. suspendierten Elastomerpartikel in dem Fluidmedium ermöglicht, und den zweiten Teilextruder derart speziell zu gestalten, dass eine optimale Zerteilung der Füllstoffpartikel in der Aufschlämmung erzielt werden kann.

Der erste Teilextruder und der zweite Teilextruder des ersten Bearbeitungsbereichs können parallel oder in Serie geschaltet sein. Die verfahrensmässige Parallelschaltung lässt sich z.B. dadurch erzielen, dass ein Seitenextruder in einen Hauptextruder einmündet, so dass der Seitenextruder den einen der beiden Teilextruder bildet und der von der Einmündung des einen Teilextruders stromauf gelegene Abschnitt des Hauptextruders den anderen Teilextruder bildet.

Bei den genannten Ausführungen, in denen der erste Bearbeitungsbereich einen ersten und einen zweiten Teilextruder aufweist, ist der zweite Bearbeitungsbereich ebenfalls vorzugsweise ein Extruder, insbesondere ein Ringextruder.

Bei einer weiterführenden Ausführung der erfindungsgemässen Vorrichtung weist der erste Bearbeitungsbereich mindestens einen Einwellenextruder und/oder mindestens einen Zweiwellenextruder auf, deren Achsen jeweils kollinear mit einer Achse der Wellen des Ringextruders sind. Dies ermöglicht es, die Wellen des mindestens einen Einwellenextruders und des mindestens einen Zweiwellenextruders mit den jeweils kollinearen Wellen des Ringextruders einstückig auszubilden, so dass sämtliche Wellen der Einwellenextruder, der Zweiwellenextruder und des Ringextruders beider Bearbeitungsbereiche gemeinsam antreibbar sind. Diese Ausführung mit gesonderten, zu einander parallel angeordneten Extrudern im ersten Bearbeitungsbereich ermöglicht es, die verschiedenen Ausgangsstoffe (Elastomer, Füllstoff, weitere Komponenten) in dem ersten Bearbeitungsbereich jeweils einer ersten Bearbeitung unabhängig von den weiteren Ausgangsstoffen bzw. Komponenten durchzuführen. Erst beim Verlassen des ersten Bearbeitungsbereichs (Einwellenextruder, Zweiwellenextruder) gelangen die so vorbereiteten Ausgangsstoffe bzw. weiteren Komponenten in den durch den Ringextruder gebildeten zweiten Bearbeitungsbereich, in dem dann sämtlich Ausgangsstoffe und weiteren Komponenten miteinander vermischt und gemeinsam bearbeitet werden.

Weitere Vorteile, Merkmale und Anwendungsmöglichkeiten ergeben sich aus der nun folgenden Beschreibung anhand mehrerer Ausführungsbeispiele der Erfindung.
- Fig. 1: ist eine schematische Gesamtansicht einer erfindungsgemässen Anlage zur Durchführung des erfindungsgemässen Verfahrens.
- Fig. 2A und 2B: zeigen jeweils schematisch eine Ausführung eines ersten Teils der Anlage von Fig. 1.
- Fig. 3: zeigt schematisch eine weitere Ausführung des ersten Teils der Anlage von Fig. 1.
- Fig. 4: zeigt schematisch eine weitere Ausführung des ersten Teils der Anlage von Fig. 1.

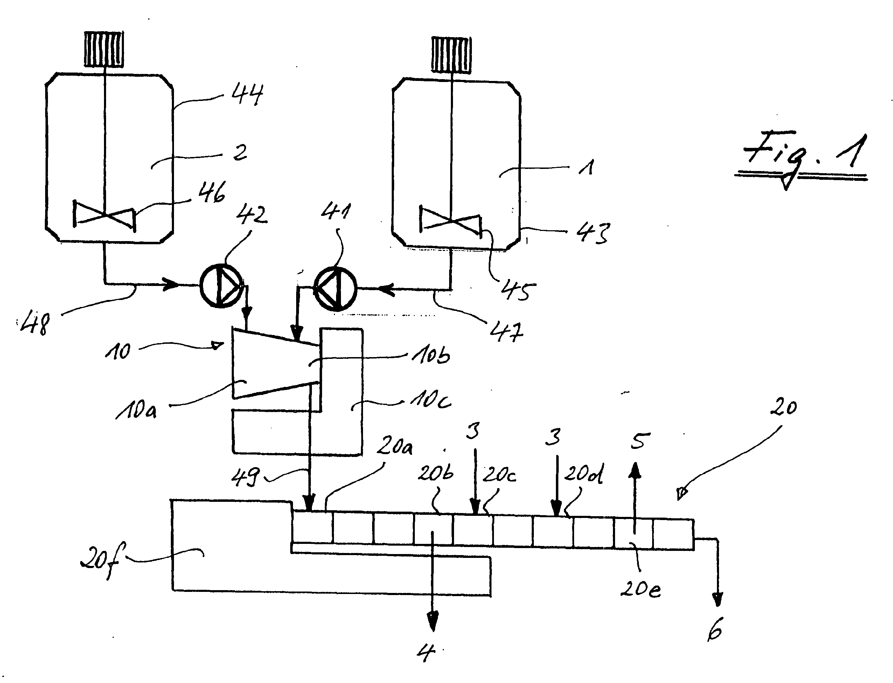

Fig. 1 ist eine schematische Gesamtansicht einer Anlage zum kontinuierlichen Herstellen von Elastomermischungen. Die Ausgangsstoffe sind gleichmässig verteilte Elastomerpartikel 1 in einem Fluidmedium, eine Füllstoff-Partikel-Aufschlämmung 2 sowie weitere Komponenten 3. Die in dem Fluidmedium gleichmässig verteilten Elastomerpartikel können z.B. als Lösung in einem Lösungsmittel, als emulgierte Tröpfchen in dem Fluidmedium oder als suspendierte feste oder quasi-feste Teilchen in dem Fluidmedium vorliegen. Als Elastomer kommen Naturkautschuk und Synthesekautschuk in Frage. Als Füllstoff verwendet man z.B. Russpartikel oder Silikatpartikel. Die weiteren Komponenten 3 sind z.B. Reaktionsbeschleuniger, Weichmacher und Vulkanisationsmittel.

Die Elastomer-Ausgangsstoffe 1 und die Füllstoff-Ausgangsstoffe 2 werden in einem ersten Bearbeitungsbereich 10 zusammengeführt und einer ersten Bearbeitung unterzogen, woraufhin sie einem zweiten Bearbeitungsbereich 20 zugeführt werden, indem sie einer weiteren Bearbeitung unterzogen werden. In dem zweiten Bearbeitungsbereich 20 werden die weiteren Komponenten 3 zugeführt und flüssige Komponenten 4 sowie gasförmige Komponenten 5 aus dem Produkt entzogen. Am Ende des zweiten Bearbeitungsbereichs 20 erhält man die fertige Elastomermischung 6.

Die in dem Fluidmedium gleichmässig verteilten Elastomerpartikel 1 werden in einem Behälter 43 aufbewahrt und können mittels eines Rührwerkzeuges 45 ständig in Bewegung gehalten werden. Die Füllstoffpartikel-Aufschlämmung 2 wird in einem Behälter 44 gelagert und kann ebenfalls mittels eines Rührwerkzeuges 46 ständig in Bewegung gehalten werden. Über eine Dosierpumpe 41, die in einer Leitung 47 für das Elastomermaterial geschaltet ist, werden die gleichmässig verteilten Elastomerpartikel 1 mit ihrem Fluidmedium dem ersten Bearbeitungsbereich 10 zugeführt. Über eine Leitung 48, in der eine Dosierpumpe 42 geschaltet ist, wird die Füllstoffpartikel-Aufschlämmung 2 dem ersten Bearbeitungsbereich 10 zugeführt.

Der erste Bearbeitungsbereich 10 wird durch eine Mühle, wie z.B. einer Rührwerkskugelmühle oder eine Zentrifugalmühle gebildet. In Fig. 1 ist eine konische Rührwerkskugelmühle 10 schematisch angedeutet. Der durch sie gebildete erste Bearbeitungsbereich 10 besitzt einen ersten Teilbereich 10a und eine zweiten Teilbereich 10b. Der erste Teilbereich 10a befindet sich dabei auf der Seite des breiten Endes des Kegelstumpfes, während sich der zweite Teilbereich 10b auf der Seite des schmalen Endes des Kegelstumpfes befindet. Die Füllstoffpartikel-Aufschlämmung 2 wird im ersten Teilbereich 10a des ersten Bearbeitungsbereichs 10 zugeführt, während die Elastomeremulsion bzw. Elastomersuspension 1 im zweiten Teilbereich 10b des ersten Bearbeitungsbereichs zugeführt wird. Auf diese Weise befindet sich die Füllstoffpartikel-Aufschlämmung 2 länger im ersten Bearbeitungsbereich als die Elastomeremulsion bzw. Elastomersuspension 1. Somit werden die Füllstoffpartikel 2 der zerteilenden und verteilenden Wirkung des ersten Bearbeitungsbereichs länger ausgesetzt als die Elastomerpartikel. Somit werden die Füllstoffpartikel 2 vor dem Beginn ihrer Einarbeitung in die Elastomerpartikel 1 auf die richtige bzw. angestrebte Grösse gebracht. Nachdem die Grösse der Füllstoffpartikel 2 im ersten Teilbereich 10a eingestellt worden ist, setzt im zweiten Teilbereich 10b die Einarbeitung der Füllstoffpartikel 2 in die Elastomerpartikel 1 ein. Über den Antrieb 10c der den ersten Bearbeitungsbereichs 10 bildenden Mühle sowie über die jeweiligen Zudosierungsorte in dem ersten Bearbeitungsbereich 10 (erster Teilbereich 10a, zweiter Teilbereich 10b) lässt sich das Ausmass der anfänglichen Zerkleinerung und Verteilung der Füllstoffpartikel 2, sowie das Ausmass der anfänglichen Einarbeitung ("Vorab-Einarbeitung") der Füllstoffpartikel 2 in die Elastomerpartikel 1 steuern.

Das so gewonnene Zwischenprodukt wird aus dem ersten Bearbeitungsbereich 10 über eine Leitung 49 dem zweiten Bearbeitungsbereich 20 zugeführt. Für den zweiten Bearbeitungsbereich verwendet man einen Mehrwellen-Extruder, insbesondere einem Zweiwellenextruder oder einen Ringextruder. Das Zwischenprodukt aus dem ersten Bearbeitungsbereich 10 gelangt in einen Einleitungsbereich 20a in dem zweiten Bearbeitungsbereich. In diesem zweiten Bearbeitungsbereich findet eine weitere Zerteilung, Verteilung und Einarbeitung der Füllstoffpartikel in die Elastomerpartikel statt. Da die Elastomerpartikel 1 noch mit ausreichend viel Flüssigkeit, insbesondere kühlendem Wasser, umgeben sind, findet nur eine mässige Erwärmung des Produktes statt, so dass die Elastomerpartikel 1 vor Überhitzung geschützt sind. In einem stromab in dem zweiten Bearbeitungsbereich 20 angeordneten Entwässerungsbereich 20b wird ein Grossteil der flüssigen Komponenten 4, hauptsächlich Wasser, entzogen. Dadurch wird das Produkt zunehmend eingedickt und konzentriert. Nun liegen vorwiegend Elastomerpartikel 1 und Füllstoffpartikel 2 mit nur noch geringen Mengen an organischem Lösungsmittel und Wasser vor. Weiter stromab im zweiten Bearbeitungsbereich 20 befinden sich eine erste Zudosierungsstelle 20c und eine zweite Zudosierungsstelle 20d, in denen die weiteren Komponenten (z.B. Reaktionsbeschleuniger, Weichmacher, Vulkanisationsmittel etc.) zudosiert werden. Sobald Vulkanisationsmittel zudosiert worden ist, muss darauf geachtet werden, dass im Bearbeitungsbereich 20 die Temperatur des Produktes stets unterhalb der Vulkanisationstemperatur liegt, um ein vorzeitiges Vulkanisieren des Produktes zu verhindern. Vorzugsweise wird das Produkt zwischen der ersten Zudosierungsstelle 20c und der zweiten Zudosierungsstelle 20d aufgeschmolzen, so dass ein Teil der weiteren Komponenten vor dem Aufschmelzen und ein weiterer Teil der weiteren Komponenten nach dem Aufschmelzen zudosiert wird. Die Füllstoffpartikel 2 und die weiteren Komponenten 3 sind nun in einer Elastomermatrix gleichmässig verteilt. Aus dieser ständig unter der Vulkanisationstemperatur gehaltenen Elastomerschmelze werden in einem weiter stromab gelegenen Entgasungsbereich 20e gasförmige Komponenten 5, wie z.B. Wasserdampf und andere flüchtige Reaktionsprodukte aus der Elastomerschmelze entfernt. Am Ende des zweiten Bearbeitungsbereichs 20 wird diese mit Vulkanisationsmittel versetzte "vulkanisationsbereite" Elastomerschmelze abgekühlt und in eine gewünschte Form gebracht. Somit erhält man eine verfestigte fertige Elastomermischung 6, die während ihres Abkühlens am Ende des zweiten Bearbeitungsbereich 20 in eine beliebige Form gebracht werden kann. Je nach der verwendeten Formgebungsvorrichtung (nicht gezeigt) fällt die fertige Elastomermischung als "Fell", Strang oder Granulat an. Besonders vorteilhaft ist die Granulatform für die fertige Elastomermischung 6, da sie als komfortables Ausgangsprodukt für die Fertigung speziell geformter Gummiartikel verwendet werden kann. Die Vorgehensweise für die Herstellung dieser Gummiartikel entspricht dann im wesentlichen der Vorgehensweise für die Herstellung von Thermoplastartikeln aus Thermoplast-Granulat. Zur Herstellung von Gummilangwaren, wie z.B. Profilsträngen kann dem zweiten Bearbeitungsbereich 20 als dritter Bearbeitungsbereich eine Vulkanisationsstrecke (nicht gezeigt) nachgeschaltet werden, entlang der die stranggeformte Elastomermischung nach und nach vulkanisiert wird. Somit lassen sich Gummiprofile in einem völlig kontinuierlichen Verfahren herstellen.

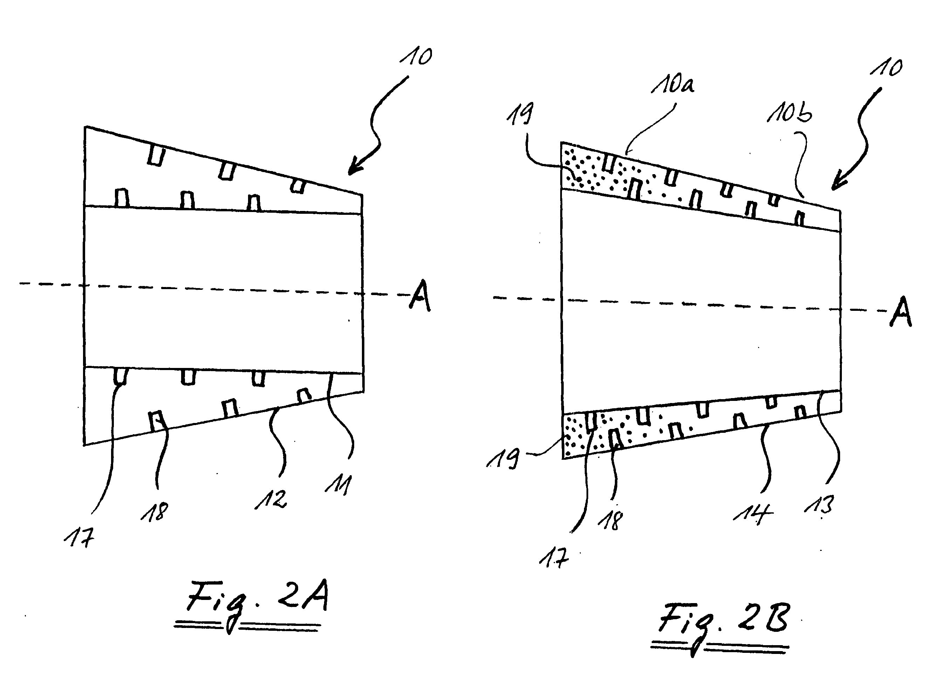

Fig. 2A und 2B zeigen jeweils schematisch eine Ausführung des ersten Bearbeitungsbereichs der Anlage von Fig. 1. Fig. 2A zeigt einen Zylinder 11 und einen mit ihm konzentrischen Konus 12, die einen mantelförmigen Hohlraum bestimmen. In diesen Hohlraum ragen stiftartige Erhebungen 17 und 18, die sich von der Oberfläche des Zylinders bzw. des Konus erstrecken. Der Zylinder 11 kann dabei als Stator dienen, während der Konus 12 als Rotor arbeitet. Alternativ können sowohl der Zylinder 11 als auch der Konus 12 als Rotor betrieben werden, zwischen deren Drehgeschwindigkeiten jedoch eine Differenz besteht. Das Produkt kann entweder durch die Zentrifugalkraft von rechts nach links durch den Hohlraum befördert werden, oder es kann entgegen dieser Zentrifugalkraft durch eine (nicht gezeigte) Pumpe von links nach rechts durch den Hohlraum befördert werden. Sowohl durch die Wahl der Produktrichtung als auch durch die Auswahl der Zudosierungsstellen für die verschiedenen Produktkomponenten lässt sich eine optimale Bearbeitung des Produktes in diesem ersten Bearbeitungsbereich 10 erreichen.

In Fig. 2B ist eine weitere Ausführung des ersten Bearbeitungsbereichs 10 gezeigt. Man verwendet hier einen inneren Konus 13 und einen äusseren Konus 14, zwischen denen der Bearbeitungsraum gebildet wird. Auch hier ragen stiftartige Erhebungen 17 und 18 von der Oberfläche des inneren bzw. äusseren Konus in den Bearbeitungsbereich. Der Bearbeitungsbereich 10 enthält ausserdem Kollisionskörper bzw. Mahlkörper 19, die durch die Zentrifugalwirkung vorzugsweise im ersten Teilbereich 10a des ersten Bearbeitungsbereichs 10 angehäuft sind. Wie schon bei Fig. 1 erwähnt, werden die Füllstoffpartikel 2 vorzugsweise im ersten Teilbereich 10a zudosiert, während die Elastomerpartikel vorzugsweise im zweiten Teilbereich 10b zudosiert werden. Die zu bearbeitende Elastomer-Füllstoff-Mischung wird dann entgegen der Zentrifugalwirkung der rotierenden Konen 13 und 14 von links nach rechts durch den ersten Bearbeitungsbereich 10 gepumpt. Auf diese Weise erfahren die Füllstoffpartikel 2 sowohl durch den Einfluss der Kollisionskörper 19 als auch durch den Einfluss der stiftartigen Erhebungen 17, 18 eine intensive Zerkleinerung im ersten Teilbereich 10a, während im anschliessenden zweiten Teilbereich 10b vorwiegend die Einarbeitung der Füllstoffpartikel 2 in die Elastomerpartikel 1 erfolgt. Mit anderen Worten bedeutet dies, dass im ersten Teilbereich 10a, in dem eine hohe Konzentration an Mahlkörpern 19 vorliegt, vorwiegend die Zerteilung der Füllstoffpartikel 2 stattfindet, während im anschliessenden Teilbereich 10b vorwiegend die Einarbeitung der im Bereich 10a zerteilten Füllstoffpartikel 2 in die hier zudosierten Elastomerpartikel 1 stattfindet. Somit wird verhindert oder zumindest unwahrscheinlich gemacht, dass die weichen Elastomerpartikel 1 durch Kollisionskörper/Mahlkörper 19 getroffen werden. Auf diese Weise wird vermieden, dass Mahlkörper 19 anstelle von Füllstoffpartikeln 2 in die Elastomerpartikel 1 eingearbeitet werden.

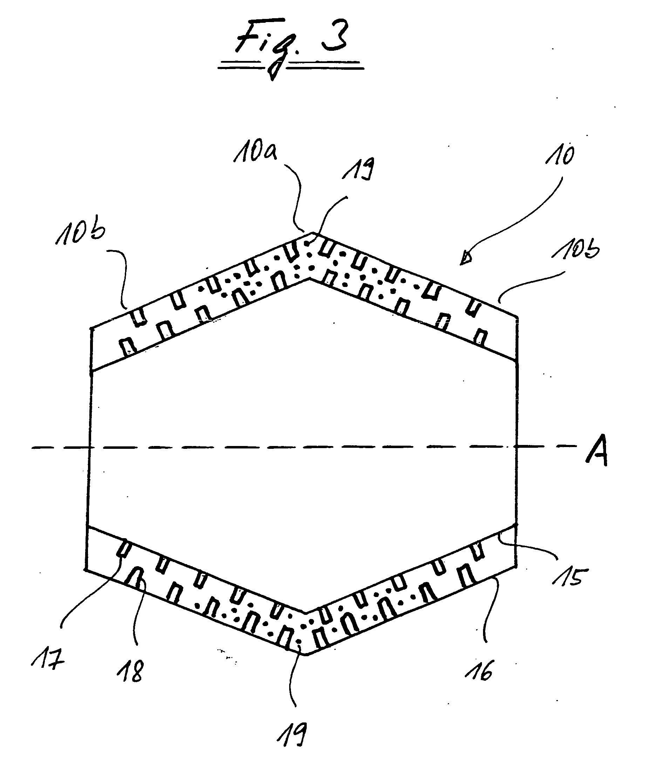

Fig. 3 zeigt schematisch eine weitere Ausführung des ersten Bearbeitungsbereichs der Anlage von Fig. 1. Der Bearbeitungsbereich 10 wird hierbei durch einen inneren, vorzugsweise drehbaren Doppelkonus 15 und einen äusseren, vorzugsweise feststehenden Doppelkonus 16 gebildet. Wie schon in Fig. 2A und 2B ragen auch hier stiftartige Erhebungen 17, 18 in den Bearbeitungsraum. Auch hier sind aufgrund der Zentrifugalwirkung der rotierenden Doppelkonen 15, 16 die Kollisionskörper/Mahlkörper 19 vorwiegend in dem von der Drehachse A radial am weitest entfernten Bereich angeordnet. Die Füllstoffpartikel 2 werden im ersten Teilbereich 10a des Bearbeitungsbereichs 10 gegen die rotationsbedingte Zentrifugalwirkung gepumpt. Die Füllstoffpartikel 2 müssen dann gegen die Zentrifugalwirkung den "Schwarm" aus Kollisionskörpern/Mahlkörpern 19 durchqueren und werden dabei intensiv zerkleinert. In dem anschliessenden zweiten Teilbereich 10b werden dann vorzugsweise links und rechts Elastomerpartikel 1 zugeführt. Somit entgehen auch hier die Elastomerpartikel 1 dem Bombardement durch die Kollisionskörper 19. Folglich werden auch hier im ersten Teilbereich 10a in erster Linie die Füllstoffpartikel 2 zerkleinert, während im Teilbereich 10b die zuvor zerkleinerten Füllstoffpartikel in die dort zudosierten Elastomerpartikel 1 eingearbeitet werden. Für die Zerkleinerung sind sowohl die stiftartigen Erhebungen 17, 18 als auch die KollisionskörperlMahlkörper 19 verantwortlich, während für die Einarbeitung lediglich die stiftartigen Erhebungen 17, 18 verantwortlich sind.

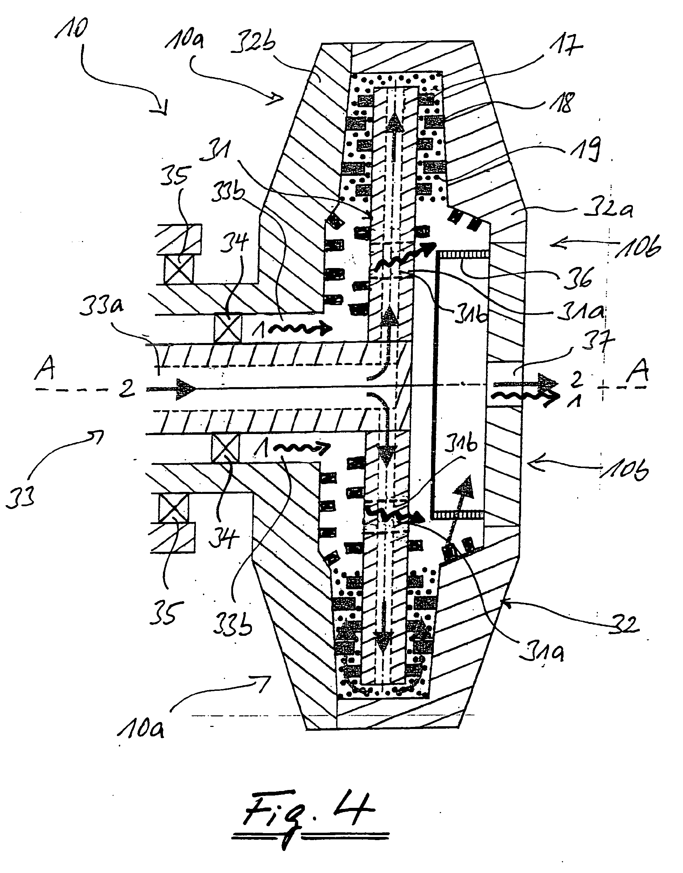

Fig. 4 zeigt schematisch eine weitere Ausführung des ersten Teilbereichs der Anlage von Fig. 1. In Fig. 4 wird eine weitere vorteilhafte Geometrie für den ersten Bearbeitungsbereich 10 gezeigt. Die hier gezeigte Zerkleinerungs- und Einarbeitungsmühle besteht aus einem ersten Rotor 31 und einem zweiten Rotor 32, die relativ zueinander mittels eines Lagers 34 für den ersten Rotor und mittels eines Lagers 35 für den zweiten Rotor um eine Drehachse A drehbar gelagert sind. Der zweite Rotor 32 besteht aus zwei Teilbereichen 32a, 32b, die drehfest miteinander verbunden sind. Der Bearbeitungsbereich 10 besteht aus einem radial aussen liegenden ersten Bearbeitungsbereich 10a und einem radial innen liegenden zweiten Bearbeitungsbereich 10b. Auf der linken Seite befindet sich radial innen gelegen ein Produkteinlass 33, der aus einem Produkteinlass 33a für Füllstoffpartikel-Aufschlämmung 2 und einem Produkteinlass 33b für Elastomer-Emulsion bzw. Elastomer-Suspension 1 besteht. Axial verschoben auf der rechten Seite befindet sich ein Produktauslass 37, durch den sowohl die Füllstoffpartikel-Aufschlämmung 2 als auch die Elastomer-Emulsion bzw. Elastomer-Suspension 1 austreten. Vor dem Auslass ist ein Sieb 36 angebracht, das ergänzend zu der Zentrifugalwirkung ("dynamische Trennung") die Kollisionskörper bzw. Mahlkörper 19 im Bearbeitungsbereich 10 und vorzugsweise in dessen erstem Teilbereich 10a zurückhält. Im innern des Rotors 31 befinden sich radiale Kanäle bzw. Rohre 31 b, die den Axialbereich der Mühle mit dem Randbereich der Mühle verbinden. Ausserdem befinden sich im Rotor 31 axiale Bohrungen 31 a, welche die linke Hälfte mit der rechten Hälfte des Bearbeitungsbereichs 20 in dessen zweitem Teilbereich 10b verbinden. Im Bereich jedes der Durchtritte 31 a geht der jeweilige radiale Kanal 31 b in ein Rohr über. Auf diese Weise wird an diesem Kreuzungspunkt eine Durchmischung der durch den Kanal bzw. das Rohr 31 b strömenden Flüssigkeit mit der durch den Durchtritt 31 a strömenden Flüssigkeit verhindert.

Im Betrieb werden sowohl der erste Rotor 31 als auch der zweite Rotor 32 um die Drehachse A gedreht. Vorzugsweise sind die Drehgeschwindigkeit des ersten Rotors 31 und die Drehgeschwindigkeit des zweiten Rotors unterschiedlich. Von den Oberflächen des ersten Rotors 31 und des zweiten Rotors 32 erstrecken sich auch hier stiftartige Erhebungen 17, 18 in den ersten Bearbeitungsbereich 10 hinein. Die durch den Einlass 33a zugeführte Füllstoffpartikel-Aufschlämmung 2 (geradliniger Pfeil) strömt durch den axialen Kanal bis zum radial innen gelegenen Ende der radialen Kanäle 31b des Rotors 31. Durch die Zentrifugalwirkung des sich drehenden Rotors 31 wird die Füllstoffpartikel-Aufschlämmung 2 radial nach aussen beschleunigt und somit durch den ersten Bearbeitungsbereich 10 gepumpt. Die Füllstoffpartikel-Aufschlämmung 2 muss dann durch den radial aussen gelegenen ersten Teilbereich 10a des ersten Bearbeitungsbereich 10 hindurch wandern und trifft dort eine hohe Konzentration an Kollisionskörpern/Mahlkörpern 19 an. Die stiftartigen Erhebungen 17, 18 und die Kollisionskörper 19 im radial aussen gelegenen ersten Teilbereich 10a sorgen für eine intensive Zerkleinerung der Füllstoffpartikel 2, die sich nun vom ersten Teilbereich 10a radial nach innen zum zweiten Teilbereich 10b bewegen. In diesem radial innen gelegenen zweiten Teilbereich 10b befinden sich aufgrund der Zentrifugalkräfte praktisch keine Kollisionskörper. Die über den Einlassbereich 33b zugeführte Elastomer-Emulsion bzw. Elastomer-Suspension 1 (gewellter Pfeil) bewegt sich nur durch den radial innen gelegenen zweiten Teilbereich 10b und wird von den Kollisionskörpern 19 verschont. Durch die auch im zweiten Teilbereich 10b vorhandenen stiftartigen Erhebungen 17, 18 findet in diesem zweiten Teilbereich eine Einarbeitung der zuvor zerkleinerten Füllstoffpartikel 2 in die Elastomerpartikel 1 statt. Dieses Gemisch aus zerkleinerten Füllstoffpartikeln 2 und Elastomerpartikeln 1, in welches in diesem zweiten Teilbereich 10b bereits ein Anteil der zerkleinerten Füllstoffpartikel 2 eingearbeitet wurde, strömt dann durch die Durchtritte 31 a durch den Rotor 31 hindurch und gelangt durch das Sieb 36 zu dem Produktauslass 37, durch den es aus der Mühle austritt.

Selbstverständlich sind auch noch weitere Konfigurationen für den ersten Bearbeitungsbereich 10 denkbar, um zu bewerkstelligen, dass in dem mit Mahlkörpern 19 angereicherten ersten Teilbereich 10a lediglich eine Zerkleinerung der Füllstoffpartikel 2 stattfindet, während im anschliessenden zweiten Teilbereich 10b eine Vorab-Einarbeitung der so zerkleinerten Füllstoffpartikel 2 in die Elastomerpartikel 1 stattfindet. Diese Art der Vorab-Einarbeitung von Füllstoffpartikeln in die Elastomerpartikel ist besonders schonend, da sie in einer gut kühlbaren, vorzugsweise wässrigen Umgebung stattfindet. Auch im anschliessenden zweiten Bearbeitungsbereich findet die weitere Einarbeitung der Füllstoffpartikel in die Elastomerpartikel zunächst in einer gut kühlbaren, vorzugsweise wässrigen Umgebung statt, die erst nach und nach durch Entwässerung eingedickt wird.

Anstatt einer durch konstruktive Massnahmen erzielten Unterteilung des ersten Bearbeitungsbereichs 10 in einem ersten Teilbereich 10a mit Kollisions-/Mahlkörpern 19 und einen zweiten Teilbereich 10b ohne Kollisions-/Mahlkörpern können auch zwei gesonderte Mühlen in Serie geschaltet werden, wobei die erste mit Kollisions-/Mahlkörpern gefüllt ist und die stromab geschaltete zweite Mühle keine Kollisions-/Mahlkörpern aufweist. Die Füllstoffpartikel-Aufschlämmung 2 wird dann in die erste ("Zerteilungs-") Mühle eingeleitet, während die Elastomerpartikel-Emulsion/Suspension 1 erst in die zweite ("Vorab-Einarbeitungs-") Mühle zusammen mit der Füllstoffpartikel-Aufschlämmung 2 eingeleitet wird.

### Bezugszeichen

- 1: gleichmässig verteilte Elastomerpartikel in Fluidmedium
- 2: Füllstoffpartikel-Aufschlämmung
- 3: weitere Komponenten
- 4: flüssige Komponenten
- 5: gasförmige Komponenten
- 6: fertige Elastomermischung (Fell, Strang, Granulat)
- 10: erster Bearbeitungsbereich, Mühle (Rührwerkskugelmühle, Zentrifugalmühle)
- 10a: erster Teilbereich
- 10b: zweiter Teilbereich
- 10c: Antrieb für Mühle
- 11: Zylinder
- 12: Konus
- 13: Konus
- 14: Konus
- 15: Doppelkonus
- 16: Doppelkonus
- 20: zweiter Bearbeitungsbereich, Mischextruder (Zweiwellen-Extruder, Ringextruder)
- 20a: Einleitungsbereich für Elastomer/Füllstoff-Mischung
- 20b: Entwässerungsbereich
- 20c: erste Zudosierungsstelle
- 20d: zweite Zudosierungsstelle
- 20e: Entgasungsbereich
- 20f: Antrieb für Mischextruder
- 31: erster Rotor
- 31 a: Durchtritt
- 31 b: Kanal bzw. Rohr
- 32: zweiter Rotor
- 32a: Teilbereich
- 32b: Teilbereich
- 33: Produkteinlass
- 33a: für Füllstoff
- 33b: für Elastomer
- 34: Lager für ersten Rotor
- 35: Lager für zweiten Rotor
- A: Drehachse
- 36: Sieb
- 37: Produktauslass
- 41: Dosierpumpe
- 42: Dosierpumpe
- 43: Behälter für Elastomer-Emulsion
- 44: Behälter für Füllstoff-Suspension
- 45: Rührwerkzeug
- 46: Rührwerkzeug
- 47: Leitung für Elastomer
- 48: Leitung für Füllstoffe
- 49: Leitung für Produkt

## Patentansprüche

1. Verfahren zum kontinuierlichen Herstellen von Elastomermischungen bzw. Elastomercompounds, bei welchem:
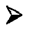 ein in Form gleichmässig verteilter Partikel in einem Fluidmedium vorliegendes Elastomer (1) und eine Füllstoffpartikel enthaltende Aufschlämmung (2) einem ersten Bearbeitungsbereich (10) zugeführt werden;
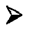 den in dem Fluidmedium gleichmässig verteilten Elastomerpartikeln (1) und der Füllstoffpartikel-Aufschlämmung (2), die dem ersten Bearbeitungsbereich (10) zugeführt worden sind, in dem ersten Bearbeitungsbereich Scher- und Dehnströmungen aufgeprägt werden, so dass eine zumindest partielle Zerteilung und/oder Verteilung der Füllstoffpartikel und/oder eine Einarbeitung der Füllstoffpartikel (2) in die Elastomerpartikel (1) stattfindet; und
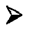 das aus dem ersten Bearbeitungsbereich gewonnene Produkt einem zweiten Bearbeitungsbereich (20) zugeführt wird, in welchem das Produkt weiteren Scher-, Dehn- und Kompressionswirkungen ausgesetzt wird, wobei es plastifiziert und/oder mastifiziert wird, **dadurch gekennzeichnet, dass** die Entfernung (20d) der Fluide und/oder Flüssigkeiten in mehreren Entwässerungsschritten während des Durchlaufs des Produktes durch den zweiten Bearbeitungsbereich (20) erfolgt und dass das Einarbeiten von Füllstoff in mehreren Einarbeitungsschritten während des Durchlaufs des Produktes durch den zweiten Bearbeitungsbereich (20) erfolgt.

2. Verfahren nach Anspruch 1, **dadurch gekennzeichnet, dass** die in dem ersten Bearbeitungsbereich (10) wirkenden Scherraten im Bereich von 100/s bis 100'000/s liegen.

3. Verfahren nach Anspruch 1 oder 2, **dadurch gekennzeichnet, dass** die Intensität der Scher- und/oder Dehnströmung in dem ersten Bearbeitungsbereich (10) stetig von einem Minimum auf ein Maximum ansteigt und anschliessend stetig oder abrupt wieder abnimmt.

4. Verfahren nach einem der vorhergehenden Ansprüche, **dadurch gekennzeichnet, dass** in dem ersten Bearbeitungsbereich (10) die maximale Scherrate in einem ersten Teilbereich (10a) höchstens etwa das 5-fache der minimalen Scherrate in einem zweiten Teilbereich (10b) des ersten Bearbeitungsbereichs ist und das Volumen des ersten Teilbereichs (10a) höchstens etwa das 3-fache des Volumens des zweiten Teilbereichs (10b) ist.

5. Verfahren nach einem der vorhergehenden Ansprüche, **dadurch gekennzeichnet, dass** weitere Komponente (3) aus der Füllstoffe, Additive, Vulkanisationsmittel, Beschleuniger, Weichmacher und Hilfsmittel aufweisenden Gruppe zudosiert werden.

6. Verfahren nach einem der vorhergehenden Ansprüche, **dadurch gekennzeichnet, dass** das erste flüssige Medium ein Lösungsmittel ist, in dem das Elastomer in gelöster Form vorliegt.

7. Verfahren nach einem der Ansprüche 1 bis 5, **dadurch gekennzeichnet, dass** das Elastomer als Emulsion einer Elastomerlösung in einer mit dem Lösungsmittel nicht mischbaren Flüssigkeit vorliegt.

8. Verfahren nach einem der Ansprüche 1 bis 5, **dadurch gekennzeichnet, dass** das Elastomer als Suspension von Elastomerteilchen in einer Flüssigkeit vorliegt.

9. Verfahren nach einem der Ansprüche 1 bis 5, **dadurch gekennzeichnet, dass** das Elastomer als gelartiger Verbund in einem Lösungsmittel vorliegt.

10. Verfahren nach einem der vorhergehenden Ansprüche, **dadurch gekennzeichnet, dass** bei Zudosierung von Vulkanisationsmittel in das Produkt die Produkttemperatur im zweiten Bearbeitungsbereich (20) zumindest förderabseitig von der Zudosierungsstelle (20c) unterhalb der Vulkanisationstemperatur gehalten wird.

11. Verfahren nach Anspruch 10, **dadurch gekennzeichnet, dass** die weiteren Komponenten (3) und die Füllstoffe (2) im zweiten Bearbeitungsbereich (20) in das Elastomer 1 eingearbeitet und/oder zerteilt und/oder verteilt werden.

12. Verfahren nach einem der vorhergehenden Ansprüche, **dadurch gekennzeichnet, dass** das Produkt im zweiten Bearbeitungsbereich (20) in einem Entgasungsbereich (20e) entgast wird.

13. Verfahren nach Anspruch 10, **dadurch gekennzeichnet, dass** die Entfernung (20d) der Fluide und/oder Flüssigkeiten aus dem Produkt vor dem Eindosieren (20c) des Vulkanisationsmittels erfolgt.

14. Verfahren nach einem der vorhergehenden Ansprüche, **dadurch gekennzeichnet, dass** die Einarbeitungsschritte und die Entwässerungsschritte abwechselnd aufeinander folgen.

15. Verfahren nach Anspruch 14, **dadurch gekennzeichnet, dass** während eines Entwässerungsschrittes von den Fluiden und/oder Flüssigkeiten nur so viel aus dem Produkt entfernt wird, dass für den jeweils nachfolgenden Einarbeitungsschritt eine optimale Einarbeitung erreicht wird.

16. Verfahren nach einem der vorhergehenden Ansprüche, **dadurch gekennzeichnet, dass** das Produkt mit einem Koagulationsmittel versetzt wird.

17. Verfahren nach einem der vorhergehenden Ansprüche, **dadurch gekennzeichnet, dass** das Produkt beim Austreten aus dem zweiten Bearbeitungsbereich (20) geformt wird.

18. Verfahren nach Anspruch 17, **dadurch gekennzeichnet, dass** das geformte Produkt granuliert wird.

19. Verfahren nach Anspruch 10, **dadurch gekennzeichnet, dass** das aus dem zweiten Bearbeitungsbereich austretende und mit Vulkanisationsmittel versetzte Produkt in einem dritten Bearbeitungsbereich zu einem kontinuierlichen Profilstrang geformt und ausvulkanisiert wird.

20. Verfahren nach Anspruch 19, **dadurch gekennzeichnet, dass** von dem fertig ausvulkanisierten Vorderende des aus dem dritten Bearbeitungsbereich austretendem kontinuierlichem Profilstrangs Profile mit bestimmter Länge geschnitten werden.

21. Vorrichtung zum Durchführen des Verfahrens nach einem der vorhergehenden Ansprüche mit einem ersten Bearbeitungsbereich (10), in dem dem Produkt Scher- und Dehnströmungen aufgeprägt werden, so dass eine,zumindest partielle Zerteilung und/oder Verteilung der Füllstoffpartikel und/oder eine Einarbeitung der Füllstoffpartikel in die Elastomerpartikel stattfindet, und einem zweiten Bearbeitungsbereich (20), in dem das Produkt weiteren Scher-, Dehn- und Kompressionswirkungen ausgesetzt wird, so dass es plastifiziert und/oder mastifiziert wird, **dadurch gekennzeichnet, dass** der erste Bearbeitungsbereich (10) ein Zwischenraum zwischen zwei koaxialen Drehelementen (11, 12; 13, 14) ist, die relativ zueinander um ihre gemeinsame Achse A drehbar sind.

22. Vorrichtung nach Anspruch 21, **dadurch gekennzeichnet, dass** die beiden koaxialen Drehelemente jeweils ein Zylinder (11) und ein Konus (12) sind oder jeweils ein Konus (13, 14) sind, dergestalt, dass sich der Zwischenraum zwischen den koaxialen Drehelementen in der Produkt-Förderrichtung verjüngt oder erweitert.

23. Vorrichtung nach Anspruch 21, **dadurch gekennzeichnet, dass** die beiden koaxialen Drehelemente jeweils ein Doppelkonus (15, 16) sind, dergestalt, dass sich der Zwischenraum zwischen den koaxialen Doppelkonen (15, 16) entlang der Produkt-Förderrichtung zuerst zunehmend von der Drehachse A entfernt und sich anschliessend wieder zunehmend der Drehachse A nähert.

24. Vorrichtung nach einem der Ansprüche 21 bis 23, **dadurch gekennzeichnet, dass** eines der Drehelemente ein Rotor und das andere ein Stator ist.

25. Vorrichtung nach einem der Ansprüche 21 bis 23, **dadurch gekennzeichnet, dass** beide Drehelemente Rotoren sind, die mit unterschiedlichen Drehgeschwindigkeiten antreibbar sind.

26. Vorrichtung nach einem der Ansprüche 21 bis 25, **dadurch gekennzeichnet, dass** sich von der Oberfläche des jeweiligen Drehelements stiftartige Erhebungen (17, 18) in den Zwischenraum (10) erstrecken, die sich bei Drehung der Drehelemente aneinander vorbei bewegen.

27. Vorrichtung nach einem der Ansprüche 21 bis 26, **dadurch gekennzeichnet, dass** sich in dem Zwischenraum (10) Kollisionskörper (19) befinden, die mit der Oberfläche und/oder den stiftartigen Erhebungen der Drehelemente und/oder dem Produkt zusammenstossen können.

28. Vorrichtung nach Anspruch 21, **dadurch gekennzeichnet, dass** der erste Bearbeitungsbereich (10) der Mahlraum einer Zentrifugalmühle ist.

29. Vorrichtung nach Anspruch 21, **dadurch gekennzeichnet, dass** der zweite Bearbeitungsbereich (20) der Prozessraum eines Mischextruders, insbesondere eines Mehrwellenextruders ist.

30. Vorrichtung nach Anspruch 29, **dadurch gekennzeichnet, dass** der Mischextruder ein dichtkämmender, gleichsinnig drehender Mehrwellenextruder ist.

31. Vorrichtung nach Anspruch 29 oder 30, **dadurch gekennzeichnet, dass** der Mehrwellenextruder mindestens eine seitliche Öffnung aufweist, in die jeweils ein zu ihr hin fördernder Seitenextruder mündet, wobei der eine bzw. die mehreren Entwässerungsschritte an der einen bzw. den mehreren seitlichen Öffnungen entlang der Produkt-Durchlaufrichtung entlang des Mischextruders erfolgen.

32. Vorrichtung nach Anspruch 31, **dadurch gekennzeichnet, dass** sie einen dem zweiten Bearbeitungsbereich (20) nachgeschalteten dritten Bearbeitungsbereich aufweist.

33. Vorrichtung nach Anspruch 32, **dadurch gekennzeichnet, dass** der dritte Bearbeitungsbereich eine Vulkanisationsstrecke ist.

34. Verfahren nach Anspruch 1, **dadurch gekennzeichnet, dass** der erste Bearbeitungsbereich (10) ein erster Abschnitt eines Extruders ist und der zweite Bearbeitungsbereich (20) ein zweiter Abschnitt desselben Extruders ist.

35. Verfahren nach Anspruch 34, **dadurch gekennzeichnet, dass** der Extruder ein Mehrwellen-Extruder ist.

36. Verfahren nach Anspruch 1, **dadurch gekennzeichnet, dass** der erste Bearbeitungsbereich (10) einen ersten Teilextruder aufweist, durch den das in Form gleichmässig verteilter Partikel in dem Fluidmedium vorliegende Elastomer (1) bearbeitet wird, und einen zweiten Teilextruder aufweist, durch den die Füllstoffpartikel enthaltende Aufschlämmung (2) bearbeitet wird.

37. Verfahren nach Anspruch 36, **dadurch gekennzeichnet, dass** der erste Teilextruder und der zweite Teilextruder des ersten Bearbeitungsbereichs (10) parallel geschaltet sind.

38. Verfahren nach Anspruch 36, **dadurch gekennzeichnet, dass** der erste Teilextruder und der zweite Teilextruder des ersten Bearbeitungsbereichs (10) in Serie geschaltet sind.

39. Vorrichtung nach Anspruch 21, **dadurch gekennzeichnet, dass** der erste Bearbeitungsbereich (10) ein erster Abschnitt eines Extruders ist und der zweite Bearbeitungsbereich (20) ein zweiter Abschnitt desselben Extruders ist.

40. Vorrichtung nach Anspruch 39, **dadurch gekennzeichnet, dass** der Extruder ein Mehrwellen-Extruder ist.

41. Vorrichtung nach Anspruch 21, **dadurch gekennzeichnet, dass** der erste Bearbeitungsbereich (10) einen ersten Teilextruder aufweist, in dem das in Form gleichmässig verteilter Partikel in dem Fluidmedium vorliegende Elastomer (1) bearbeitet werden kann, und einen zweiten Teilextruder aufweist, in dem die Füllstoffpartikel enthaltende Aufschlämmung (2) bearbeitet werden kann.

42. Vorrichtung nach Anspruch 41, **dadurch gekennzeichnet, dass** der erste Teilextruder und der zweite Teilextruder des ersten Bearbeitungsbereichs (10) parallel geschaltet sind und gemeinsam in den zweiten Bearbeitungsbereich (20) münden.

43. Vorrichtung nach Anspruch 41, **dadurch gekennzeichnet, dass** der erste Teilextruder und der zweite Teilextruder des ersten Bearbeitungsbereichs (10) in Serie geschaltet sind.

44. Vorrichtung nach einem der Ansprüche 41 bis 43, **dadurch gekennzeichnet, dass** der zweite Teilbereich (20) ein Extruder ist.

45. Vorrichtung nach einem der Ansprüche 41 bis 44, **dadurch gekennzeichnet, dass** der zweite Bearbeitungsbereich (20) ein Ringextruder ist und die Teilextruder des ersten Bearbeitungsbereichs (10) jeweils ein Einwellenextruder oder ein Zweiwellenextruder sind, wobei die Welle eines Einwellenextruders jeweils koaxial zu einer Welle des Ringextruders ist und das Wellenpaar eines Zweiwellenextruders jeweils koaxial zu einem Paar benachbarter Wellen des Ringextruders ist.

## Claims

1. A method for continuously manufacturing elastomer mixtures or elastomer compounds, in which
• An elastomer (1) present in the form of uniformly distributed particles in a fluid medium and a slurry (2) containing filler particles are supplied to a first processing area (10);
• The elastomer particles (1) uniformly distributed in the fluid medium and the filler particle-slurry (2) supplied to the first processing area (10) are exposed to shearing and expansion flows in the first processing area, so that the filler particles are at least partially divided and/or distributed, and/or the filler particles (2) are incorporated into the elastomer particles (1); and
• The product obtained from the first processing area is supplied to the second processing area (20), in which the product is exposed to further shearing, expansion and compression effects, during which it is plasticized and/or masticated, **characterized in that** the fluids and/or liquids are removed (20d) in several dewatering steps as the product passes through the second processing area (20), and that filler is incorporated in several incorporation steps as the product passes through the second processing area (20).

2. The method according to claim 1, **characterized in that** the shearing rates active in the first processing area (10) range from 100/s to 100,000/s.

3. The method according to claim 1 or 2, **characterized in that** the intensity of the shearing and/or expansion flow in the first processing area (10) steadily rises from a minimum to a maximum, and then tapers off again, steadily or abruptly.

4. The method according to one of the preceding claims, **characterized in that** the maximum shearing rate in a first partial area (10a) in the first processing area (10) is at most about 5 times the minimum shearing rate in a second partial area (10b) of the first processing area, and the volume of the first partial area (10a) is at most about 3 times the volume of the second partial area (10b).

5. The method according to one of the preceding claims, **characterized in that** the other component (3) are metered in from the group containing fillers, additives, vulcanization agents, accelerators, softeners and aids.

6. The method according to one of the preceding claims, **characterized in that** the first fluid medium is a solvent in which the elastomer is present in dissolved form.

7. The method according to one of claims 1 to 5, **characterized in that** the elastomer is present as an emulsion of an elastomer solution in a liquid not miscible with the solvent.

8. The method according to one of claims 1 to 5, **characterized in that** the elastomer is present as a suspension of elastomer particles in a liquid.

9. The method according to one of claims 1 to 5, **characterized in that** the elastomer is present as a gel-like compound in a solvent.

10. The method according to one of the preceding claims, **characterized in that**, when metering vulcanization agent into the product, the product temperature in the second processing area (20) is held below the vulcanization temperature, at least downstream from the metering point (20c).

11. The method according to claim 10, **characterized in that** the other components (3) and fillers (2) in the second processing area (20) are incorporated and/or divided and/or distributed into the elastomer 1.

12. The method according to one of the preceding claims, **characterized in that** the product in the second processing area (20) is degassed in a degassing area (20e).

13. The method according to claim 10, **characterized in that** the fluids and/or liquids are removed (20d) form the product before metering in (20c) the vulcanization agent.

14. The method according to one of the preceding claims, **characterized in that** the incorporation steps and the dewatering steps alternate.

15. The method according to claim 14, **characterized in that** only so much fluid and/or liquid is removed from the product during a dewatering step as to allow an optimal incorporation for the respectively ensuing incorporation step.

16. The method according to one of the preceding claims, **characterized in that** the product is reacted with a coagulant.

17. The method according to one of the preceding claims, **characterized in that** the product is molded as it exits the second processing area (20).

18. The method according to claim 17, **characterized in that** the molded product is granulated.

19. The method according to claim 10, **characterized in that** the product exiting the second processing area and reacted with vulcanization agent is molded into a continuous profile strand and vulcanized completely in a third processing area.

20. The method according to claim 19, **characterized in that** profiles with a specific length are cut out of the completely vulcanized front end of the continuous profile strand exiting the third processing area.

21. A device for implementing the method according to one of the preceding claims, with a first processing area (10), in which the product is exposed to shearing and expansion flows, so that the filler particles are at least partially divided and/or distributed, and/or the filler particles are incorporated into the elastomer particles, and a second processing area (20), in which the product is exposed to further shearing, expansion and compression effects, so that it is plasticized and/or masticated, **characterized in that** the first processing area (10) is a gap between two coaxial rotating elements (11, 12; 13, 14), which can be turned around their shared axis A relative to each other.

22. The device according to claim 21, **characterized in that** the two coaxial rotating elements each are a cylinder (11) and cone (12), or a respective cone (13, 14), designed in such a way that the gap between the coaxial rotating elements narrows or expands in the product conveying direction.

23. The device according to claim 21, **characterized in that** the two coaxial rotating elements each are a double cone (15, 16), designed in such a way that the gap between the coaxial double cones (15, 16) first becomes increasingly remote from the rotational axis A along the product conveying direction, and subsequently becomes increasingly closer to the rotational axis A again.

24. The device according to one of claims 21 to 23, **characterized in that** one of the rotating elements is a rotor, and the other is a stator.

25. The device according to one of claims 21 to 23, **characterized in that** both rotating elements are rotors that can be driven at different rotational velocities.

26. The device according to one of claims 21 to 25, **characterized in that** pin-like elevations (17, 18) extend from the surface of the respective rotating element into the gap (10), moving past one another as the rotating elements turn.

27. The device according to one of claims 21 to 26, **characterized in that** collision bodies (19) are located in the gap (10), and can collide with the surface and/or pin-like elevations of the rotating elements and/or the product.

28. The device according to claim 21, **characterized in that** the first processing area (10) is the milling space of a centrifugal mill.

29. The device according to claim 21, **characterized in that** the second processing area (20) is the processing space of a mixing extruder, in particular a multi-screw extruder.

30. The device according to claim 29, **characterized in that** the mixing extruder is a tightly meshing, corotating multi-screw extruder.

31. The device according to claim 29 or 30, **characterized in that** the multi-screw extruder exhibits at least one lateral opening, into which a respective lateral extruder conveying toward it empties, wherein the one or more dewatering steps take place at the one or more lateral openings along the product throughput direction along the mixing extruder.

32. The device according to claim 31, **characterized in that** it exhibits a third processing area downstream from the second processing area (20).

33. The device according to claim 32, **characterized in that** the third processing area is a vulcanization path.

34. The method according to claim 1, **characterized in that** the first processing area (10) is a first section of an extruder, and the second processing area (20) is a second section of said extruder.

35. The method according to claim 34, **characterized in that** the extruder is a multi-screw extruder.

36. The method according to claim 1, **characterized in that** the first processing area (10) exhibits a first partial extruder, through which the elastomer (1) present in the form of uniformly distributed particles in the fluid medium is processed, and exhibits a second partial extruder, through which the slurry (2) containing the filler particles is processed.

37. The method according to claim 36, **characterized in that** the first partial extruder and second partial extruder of the first processing area (10) are connected in parallel.

38. The method according to claim 36, **characterized in that** the first partial extruder and second partial extruder of the first processing area (10) are connected in series.

39. The device according to claim 21, **characterized in that** the first processing area (10) is a first section of an extruder, and the second processing area (20) is a second section of said extruder.

40. The device according to claim 39, **characterized in that** the extruder is a multi-screw extruder.

41. The device according to claim 21, **characterized in that** the first processing area (10) exhibits a first partial extruder, in which the elastomer (1) present in the form of uniformly distributed particles in the fluid medium can be processed, and exhibits a second partial extruder, in which the slurry (2) containing the filler particles can be processed.

42. The device according to claim 41, **characterized in that** the first partial extruder and second partial extruder of the first processing area (10) are connected in parallel, and together empty into the second processing area (20).

43. The device according to claim 41, **characterized in that** the first partial extruder and second partial extruder of the first processing area (10) are connected in series.

44. The device according to one of claims 41 to 43, **characterized in that** the second partial area (20) is an extruder.

45. The device according to one of claims 41 to 44, **characterized in that** the second processing area (20) is a ring extruder, and the partial extruders of the first processing area (10) are each a single-screw extruder or a two-screw extruder, wherein the screw of a single-screw extruder is respectively coaxial to a screw of the ring extruder, and the screw pair of a two-screw extruder is respectively coaxial to a pair of adjacent screws of the ring extruder.

## Revendications

1. Procédé de fabrication continue de mélanges élastomères, respectivement de composés élastomères, selon le quel
> on amène un élastomère (1) se présentant sous la forme de particules régulièrement réparties dans un milieu fluide et une barbotine contenant des particules de matière de remplissage (2) dans une première zone de mise en oeuvre (10) ;
> dans la première zone de mise en oeuvre, on applique aux particules élastomères (1) régulièrement réparties dans un milieu fluide et à la barbotine de particules de matières de remplissage (2) qui ont été amenés dans la première zone de mise en oeuvre (10) des courants de cisaillement et d'étirement, pour donner lieu à une division et/ou à une répartition au moins partielle des particules de matière de remplissage et/ou à une incorporation des particules de matière de remplissage (2) dans les particules élastomères (1) ; et
> on amène le produit obtenu dans la première zone de mise en oeuvre dans une deuxième zone de mise en oeuvre (20), dans laquelle le produit est exposé à des effets de cisaillement, d'étirement et de compression supplémentaires, dans lequel cas, il est plastifié ou mastiqué,
**caractérisé en ce que** le retrait (20d) des fluides et/ou liquides est assuré en plusieurs étapes de déshydratation pendant le passage du produit à travers la deuxième zone de mise en oeuvre (20) et **en ce que** l'incorporation de matière de remplissage est assurée en plusieurs étapes d'incorporation, pendant le passage du produit à travers la deuxième zone de mise en oeuvre (20).

2. Procédé selon la revendication 1, **caractérisé en ce que** les taux de cisaillement agissant dans la première zone de mise en oeuvre (10) sont de l'ordre de 100/s à 100'000/s.

3. Procédé selon la revendication 1 ou 2, **caractérisé en ce que** l'intensité du courant de cisaillement et/ou courant d'étirage dans la première zone de mise en oeuvre (10) croît en continu d'un minimum à un maximum, pour décroître ensuite soit en continu ou de façon abrupte.

4. Procédé selon l'une quelconque des revendications précédentes, **caractérisé en ce que** dans la première zone de mise en oeuvre (10), le taux de cisaillement maximum dans une première zone partielle (10a) correspond au plus à environ 5 fois le taux de cisaillement minimum dans une deuxième zone partielle (10b) de la première zone de mise en oeuvre et le volume de la première zone partielle (10a) correspond au plus à environ 3 fois le volume de la deuxième zone partielle (10b).

5. Procédé selon l'une quelconque des revendications précédentes, **caractérisé en ce qu'**on rajoute par dosage des composants supplémentaires (3) du groupe comportant les matières de remplissage, les additifs, les agents de vulcanisation, les accélérateurs, les plastifiants et les adjuvants.

6. Procédé selon l'une quelconque des revendications précédentes, **caractérisé en ce que** le premier milieu liquide est un solvant, dans lequel l'élastomère se présente sous forme dissoute.

7. Procédé selon l'une quelconque des revendications 1 à 5, **caractérisé en ce que** l'élastomère se présente sous la forme d'une solution d'élastomère, dans un liquide non miscible avec le solvant.

8. Procédé selon l'une quelconque des revendications 1 à 5, **caractérisé en ce que** l'élastomère se présente sous la forme d'une suspension de particules d'élastomère dans un liquide.

9. Procédé selon l'une quelconque des revendications 1 à 5, **caractérisé en ce que** l'élastomère se présente sous la forme d'une composition gélatineuse dans un solvant.

10. Procédé selon l'une quelconque des revendications précédentes, **caractérisé en ce que** lors de l'ajout par dosage d'agent de vulcanisation dans le produit, on maintient la température du produit dans la deuxième zone de mise en oeuvre (20) au moins en aval du transport de l'endroit de dosage (20c) en dessous de la température de vulcanisation.

11. Procédé selon la revendication 10, **caractérisé en ce qu'**on incorpore et/ou on divise et/ou on répartit les composants supplémentaires (3) et les matières de remplissage (2) dans l'élastomère (1) dans la deuxième zone de mise en oeuvre (20).

12. Procédé selon l'une quelconque des revendications précédentes, **caractérisé en ce qu'**on dégaze le produit dans la deuxième zone de mise en oeuvre (20), dans une zone de dégazage (20e).

13. Procédé selon la revendication 10, **caractérisé en ce que** le retrait (20d) des fluides et/ou liquides du produit est assuré avant le rajout par dosage (20c) de l'agent de vulcanisation.

14. Procédé selon l'une quelconque des revendications précédentes, **caractérisé en ce que** les étapes d'incorporation et les étapes de déshydratation se suivent successivement.

15. Procédé selon la revendication 14, **caractérisé en ce que** pendant une étape de déshydratation, on ne retire du produit qu'une quantité des fluides et/ou des liquides propre à obtenir une incorporation optimale pour l'étape d'incorporation respectivement consécutive.

16. Procédé selon l'une quelconque des revendications précédentes, **caractérisé en ce qu'**on mélange le produit avec un agent de coagulation.

17. Procédé selon l'une quelconque des revendications précédentes, **caractérisé en ce qu'**on façonne le produit à la sortie de la deuxième zone de mise en oeuvre (20).

18. Procédé selon la revendication 17, **caractérisé en ce qu'**on granule le produit façonné.

19. Procédé selon la revendication 10, **caractérisé en ce que**, dans une troisième zone de mise en oeuvre, on façonne le produit sortant de la deuxième zone de mise en oeuvre et mélangé à un agent de vulcanisation en un boyau profilé continu et on le vulcanise complètement.

20. Procédé selon la revendication 19, **caractérisé en ce que** de l'extrémité antérieure du boyau profilé continu dont la vulcanisation complète est achevée, sortant de la troisième zone de mise en oeuvre, on coupe des profilés d'une certaine longueur.

21. Dispositif de réalisation du procédé selon l'une quelconque des revendications précédentes, avec une première zone de mise en oeuvre (10), dans laquelle on applique au produit des courants de cisaillement et d'étirage, pour donner lieu à une division et/ou à une répartition au moins partielle des particules de matière de remplissage et/ou à une incorporation des particules de matière de remplissage dans les particules d'élastomère et avec une deuxième zone de mise en oeuvre (20), dans laquelle on expose le produit à des effets de cisaillement, d'étirage et de compression supplémentaires, pour qu'il soit plastifié et/ou mastiqué,
**caractérisé en ce que** la première zone de mise en oeuvre (10) est un espace intermédiaire entre des éléments rotatifs coaxiaux (11, 12 ; 13, 14), qui sont rotatifs l'une par rapport à l'autre autour de leur axe commun A.

22. Dispositif selon la revendication 21, **caractérisé en ce que** les deux éléments rotatifs coaxiaux sont respectivement un cylindre (11) et un cône (12), ou respectivement un cône (13, 14), de façon telle, que l'espace intermédiaire entre les éléments rotatifs coaxiaux se rétrécisse ou s'élargisse en direction de transport du produit.

23. Dispositif selon la revendication 21, **caractérisé en ce que** les deux éléments rotatifs coaxiaux sont respectivement un double cône (15, 16) de façon telle, que l'espace intermédiaire entre les doubles cônes coaxiaux (15, 16) le long de la direction de transport du produit s'éloigne d'abord de plus en plus de l'axe de rotation A, pour se rapprocher ensuite de plus en plus de l'axe de rotation A.

24. Dispositif selon l'une quelconque des revendications 21 à 23, **caractérisé en ce que** l'un des éléments rotatifs est un rotor et l'autre est un stator.

25. Dispositif selon l'une quelconque des revendications 21 à 23, **caractérisé en ce que** les deux éléments rotatifs sont des rotors, qui peuvent être entraînés à différentes vitesses de rotation.

26. Dispositif selon l'une quelconque des revendications 21 à 25, **caractérisé en ce que** des élévations (17, 18) du type de chevilles, qui lors de la rotation des éléments rotatifs se déplacent les unes devant les autres s'étendent à partir de la surface de l'élément rotatif respectif dans l'espace intermédiaire (10).

27. Dispositif selon l'une quelconque des revendications 21 à 26, **caractérisé en ce que** dans l'espace intermédiaire (10) se trouvent des organes de collision (19), qui peuvent heurter la surface et/ou les élévations du type de chevilles des éléments rotatifs et/ou le produit.

28. Dispositif selon la revendication 21, **caractérisé en ce que** la première zone de mise en oeuvre (10) est l'espace de broyage d'un broyeur centrifuge.

29. Dispositif selon la revendication 21, **caractérisé en ce que** la deuxième zone de mise en oeuvre (20) est l'espace de processus d'une extrudeuse mélangeuse, notamment d'une extrudeuse à arbres multiples.

30. Dispositif selon la revendication 29, **caractérisé en ce que** l'extrudeuse mélangeuse est une extrudeuse à arbres multiples, à engagement serré, tournant dans le même sens.

31. Dispositif selon la revendication 29 ou 30, **caractérisé en ce que** l'extrudeuse à arbres multiples comporte une ouverture latérale, dans laquelle débouche chaque fois une extrudeuse latérale, transportant vers elles, l'étape ou les plusieurs étapes de déshydratation étant effectuée(s) sur l'ouverture latérale ou sur les plusieurs ouvertures latérales, le long de la direction de passage du produit, le long de l'extrudeuse.

32. Dispositif selon la revendication 31, **caractérisé en ce qu'**il comporte une troisième zone de mise en oeuvre montée en aval de la deuxième zone de mise en oeuvre (20).

33. Dispositif selon la revendication 32, **caractérisé en ce que** la troisième zone de mise en oeuvre est un parcours de vulcanisation.

34. Procédé selon la revendication 1, **caractérisé en ce que** la première zone de mise en oeuvre (10) est un premier tronçon d'une extrudeuse et la deuxième zone de mise en oeuvre (20) est un deuxième tronçon de cette même extrudeuse.

35. Procédé selon la revendication 34, **caractérisé en ce que** l'extrudeuse est une extrudeuse à arbres multiples.

36. Procédé selon la revendication 1, **caractérisé en ce que** la première zone de mise en oeuvre (10) comporte une première extrudeuse partielle destinée à la mise en oeuvre de l'élastomère (1) présent dans le milieu fluide sous la forme de particules régulièrement réparties et une deuxième extrudeuse partielle, destinée à la mise en oeuvre de la barbotine contenant les particules de matière de remplissage (2).

37. Procédé selon la revendication 36, **caractérisé en ce que** la première extrudeuse partielle et la deuxième extrudeuse partielle de la première zone de mise en oeuvre (10) sont montées en parallèle.

38. Procédé selon la revendication 36, **caractérisé en ce que** la première extrudeuse partielle et la deuxième extrudeuse partielle de la première zone de mise en oeuvre (10) sont montées en série.

39. Dispositif selon la revendication 21, **caractérisé en ce que** la première zone de mise en oeuvre (10) est un premier tronçon d'une extrudeuse et la deuxième zone de mise en oeuvre (20) est un deuxième tronçon de cette même extrudeuse.

40. Dispositif selon la revendication 39, **caractérisé en ce que** l'extrudeuse est une extrudeuse à arbres multiples.

41. Dispositif selon la revendication 21, **caractérisé en ce que** la première zone de mise en oeuvre (10) comporte une première extrudeuse partielle destinée à la mise en oeuvre de l'élastomère (1) présent dans le milieu fluide sous la forme de particules régulièrement réparties et une deuxième extrudeuse partielle, destinée à la mise en oeuvre de la barbotine contenant les particules de matière de remplissage (2).

42. Dispositif selon la revendication 41, **caractérisé en ce que** la première extrudeuse partielle et la deuxième extrudeuse partielle de la première zone de mise en oeuvre (10) sont montées en parallèle et débouchent ensemble dans la deuxième zone de mise en oeuvre (20).

43. Dispositif selon la revendication 41, **caractérisé en ce que** la première extrudeuse partielle et la deuxième extrudeuse partielle de la première zone de mise en oeuvre (10) sont montées en série.

44. Dispositif selon l'une quelconque des revendications 41 à 43, **caractérisé en ce que** la deuxième zone partielle (20) est une extrudeuse.

45. Dispositif selon l'une quelconque des revendications 41 à 44, **caractérisé en ce que** la deuxième zone de mise en oeuvre (20) est une extrudeuse annulaire et les extrudeuses partielles de la première zone de mise en oeuvre (10) sont chacune une extrudeuse à un arbre ou une extrudeuse à deux arbres, l'arbre d'une extrudeuse à un arbre étant chaque fois coaxial à un arbre de l'extrudeuse annulaire, et la paire d'arbres d'une extrudeuse à deux arbres étant chaque fois coaxiale à une paire d'arbres voisins de l'extrudeuse annulaire.
